# EUROPÄISCHE PATENTSCHRIFT

(11) **EP 3 141 317 B1**
(45) Veröffentlichungstag und Bekanntmachung des Hinweises auf die Patenterteilung: **06.11.2019**
(21) Anmeldenummer: 16187560.4
(22) Anmeldetag: 07.09.2016
(51) Int. Cl.: B21J 15/04, B21J 15/26, B21J 15/28, B25B 27/00

(54) **HANDHALTBARES NIETGERÄT UND VERFAHREN ZU SEINER EINRICHTUNG**
RIVETING DEVICE AND METHOD FOR SETTING IT UP
RIVETEUSE MANUELLE ET PROCÉDÉ POUR SA CONFIGURATION

(30) Priorität: 08.09.2015 DE 102015115057
(43) Veröffentlichungstag der Anmeldung: 15.03.2017
(73) Patentinhaber: VVG-Befestigungstechnik GmbH & Co. KG, 24536 Neumünster (DE)
(72) Erfinder: Honsel, Michael H., 24402 Esgrus (DE)
(74) Vertreter: Braun-Dullaeus Pannen Emmerling Patent- & Rechtsanwaltspartnerschaft mbB

(56) Entgegenhaltungen:
- DE-A1- 4 339 117
- DE-A1- 10 305 285
- DE-A1-102013 105 703
- DE-B3-112004 000 660

## Beschreibung

Die Erfindung betrifft ein Verfahren zur Einrichtung eines mit einem, insbesondere elektrischen, Antrieb versehenen handhaltbaren Nietgeräts zum Setzen von Blindnietelementen in einer Aufnahmebohrung, sowie ein handhaltbares Nietgerät, eingerichtet zur Durchführung des Verfahrens (siehe z.B. DE 10 2013 105 703 A1).

Mit solchen Nietgeräten werden insbesondere Blindnietmuttern und/oder Blindnietschrauben gesetzt. Das Verfahren dient dazu, das Nietgerät nun an einen bestimmten Typ von Blindnietelementen einzurichten, die anschließend mit dem Nietgerät in großer Anzahl gesetzt werden sollen.

Das Nietgerät ist dabei ausgebildet, während des Setzvorgangs eine Zugkraft auf ein Zugelement des Blindnietelements aufzubringen. Bei Nietgeräten ist die charakteristische Größe während des Nietsetzvorgangs die maximale Zugkraft, die auf das Blindnietelement aufgebracht wird. Diese maximale Zugkraft wird bei elektrisch angetriebenen Nietgeräten wiederum definiert durch den elektrischen Strom, der von einem elektrischen Antrieb aufgenommen wird in die Zugkraft umgewandelt wird. Die maximale Zugkraft und damit auch die maximal aufgenommene Stromstärke muss dabei so definiert werden, dass zum einen eine ausreichende Befestigung des Nietelements erfolgt, zugleich darf die aufgebrachte Kraft nicht zu groß sein, um das Nietelement während des Setzvorgangs zu zerstören. Bei elektrisch betriebenen Nietgeräten ist daher die maximale Stromaufnahme des Antriebs durch Vorgabe eines Stromstärkemaximalwertes zu begrenzen.

Bislang wird für die Einrichtung des Nietgeräts eine recht umständliche Prozedur durchgeführt, bei der mehrere Nietvorgänge mit einem bestimmten Typ durchgeführt werden und die geeignete maximale Kraft bzw. durch Ausprobieren entsprechend angepasst wird. Alternativ sind Tabellen vorzuhalten, aus denen sich bevorzugte Einstellparameter ergeben, woraus der Nutzer einen geeigneten Wert auswählt und entsprechend manuell das Nietgerät einstellt.

Aufgabe der vorgegebenen Erfindung ist es, ein Verfahren zur Einrichtung eines handhaltbaren Nietgeräts der eingangs genannten Art zu vereinfachen. Diese Aufgabe wird gelöst durch ein Verfahren nach Anspruch 1 sowie ein Nietgerät nach Anspruch 9; bevorzugte Ausgestaltungen ergeben sich aus den Unteransprüchen und der nachfolgenden Beschreibung.

Erfindungsgemäß ist ein Verfahren vorgesehen zur Einrichtung eines mit einem, insbesondere elektrischen, Antrieb versehenen, handhaltbaren Nietgerätes zum Setzen von Blindnietelementen in einer Aufnahmebohrung an einen zu verwendeten Typ von Blindnietelementen. Insbesondere werden Blindnietmuttern und/oder Blindnietschrauben verwendet. Das Nietgerät ist ausgebildet, während des Setzvorgangs eine Zugkraft auf ein Zugelement des Blindnietelements aufzubringen, insbesondere wobei das Zugelement am Ende des Setzvorgangs an einer Sollbruchstelle vom Rest des Blindnietelements abreißt. Die Zugkraft, mit der ein Blindnietelement gesetzt wird, wird durch einen einstellbaren Maximalwert definiert, welcher während der Einrichtung festgelegt wird.

Das Verfahren umfasst die folgenden Verfahrensschritte: Durchführen eines Setzvorgangs mit einem Blindnietelement des zu verwendeten Typs; Erfassen eines Verlaufs der Zugkraft während des Setzvorgangs und Ermitteln aus diesem Verlauf zumindest einen charakteristischen Wert, Festlegen des Maximalwerts als Funktion des charakteristischen Werts.

Der Kern der Erfindung liegt insbesondere darin, dass mit dem Nietgerät ein Setzvorgang mit entsprechenden Nietelementen durchgeführt wird, und dass während des Setzvorgangs der Verlauf der Zugkraft erfasst wird. Aus dem Verlauf der Zugkraft wird zumindest ein charakteristischer Wert ermittelt, auf dessen Basis der einzustellende Maximalwert festgelegt wird. Hierzu ist eine Funktion vorgehalten, mit deren Hilfe aus dem charakteristischen Wert der einzustellende Maximalwert berechnet wird.

Um den Verlauf der Zugkraft zu erfassen muss nicht explizit die Zugkraft gemessen werden; es reicht aus, den Verlauf eines physikalischen Wertes zu erfassen, der in unmittelbarem Zusammenhang zur Zugkraft steht, insbesondere die Stromaufnahme des elektrischen Antriebs. Der aufgenommene Strom des Antriebs ist weitgehend direkt proportional zur erzeugten Zugkraft. Aus den Messwerten der Stromstärke kann somit der Verlauf der Zugkraft rekonstruiert oder berechnet werden. In einer vorteilhaften Alternative wird der Verlauf der Zugkraft unmittelbar mithilfe eines Kraftsensors, insbesondere einem Dehnmessstreifen, erfasst. Der Kraftsensor kann an einer Zugstange des Nietgeräts angebracht sein. Bei dem Maximalwert kann es sich um einen Zugkraftmaximalwert handeln. Alternativ kann der Maximalwert auch ein Stromstärkemaximalwert sein, mit dessen Hilfe ein Strombegrenzer des Antriebs betrieben wird und damit vermieden wird, dass die Zugkraft zu groß wird.

Der Vorteil in diesem Verfahren liegt nun darin, dass Parameter, die zum Einstellen des Nietgeräts erforderlich sind, aus diesem einen, initialen Nietsetzvorgangs selbst abgeleitet werden können. Es muss folglich lediglich des Verlauf z.B. der Stromaufnahme beobachtet werden; alleine hieraus lässt sich des charakteristischen Wertes ermitteln und daraus wiederum der Maximalwert festlegen. Dieses Verfahren ist folglich robust und fehlerunanfällig, da es weitgehend ohne gedankliche Leistung des Nutzers auskommt.

Dabei wirken sich die plastischen Eigenschaften des entsprechenden Blindnietelements besonders aussagekräftig auf den Verlauf der Zugkraft über die Zugstrecke aus, wenn das Blindnietelement während des Nietsetzvorgangs während der Einrichtung nicht in einem der Blindnietelement entsprechenden Aufnahmebohrung angeordnet ist, sondern während der Einrichtung außerhalb dieser Aufnahmebohrung angeordnet ist. Dies umfasst auch etwaige Alternativen, in denen das Blindnietelement in einer deutlich zu großen Aufnahmebohrung angeordnet ist, die folglich keine Aufnahmebohrung, die dem Blindnietelement im Sinne der vorliegenden Anmeldung entspricht.

Insbesondere lässt sich bei der vorgenannten Einrichtung ein erstes Maximum im Verlauf der Zugkraft erkennen, bei dem eine erste starke Verformung des Schließwulstes stattgefunden hat, und anschließend keine weitere wesentliche Verformung bei weiterer Erhöhung der Zuglänge stattfindet. Bei diesem ersten Maximum findet im Wesentlich auch diejenige Verformung statt, die später zur Befestigung des Nietelements in der Aufnahmebohrung aufgebracht werden muss.

Der Wert dieses ersten Maximums kann dann mit einem vorgegebenen Wert, insbesondere mit einem Faktor zwischen 1,1 und 1,3 multipliziert werden. Aus dieser Multiplikation kann dann, ggf. unter Berücksichtigung einer Nutzereingabe, der Maximalwert festgelegt werden.

Vorzugsweise berücksichtigt die Funktion zum Festlegen des Maximalwerts ferner eine Nutzereingabe. Hierbei können Parameter berücksichtigt werden, die durch den reinen Nietsetzvorgang, wie oben beschrieben, nicht abgebildet werden können, beispielsweise Besonderheiten bezüglich spezieller Materialpaarungen oder Anforderungen an höhere Sicherheiten und damit eine etwaige vergrößerte erforderliche Zugkraft.

Vorzugsweise wird mittels der Steuereinheit der charakteristische Wert aus der Stromaufnahme während eines Setzvorgangs ermittelt. Die Steuereinheit umfasst dabei eine Stromstärkemesseinheit, welche die von der Antriebseinheit aufgenommene Stromstärke während des Setzvorgangs aufnimmt, woraus dann der Verlauf der Zugkraft erfasst werden kann und der Stromstärkemaximalwert als Kraftmaximalwert festgelegt werden kann.

In einer bevorzugten Ausgestaltung kann der ermittelte Maximalwert dem Nutzer über ein am Nietgerät befindliches Display angezeigt werden. Dem Nutzer ergeben sich so weitere Kontrollmöglichkeiten, beispielsweise durch den Vergleich des angezeigten Maximalwertes mit einer herstellerseitigen Vorgabe für den Typ des Blindnietelements.

Ferner betrifft die Erfindung ein handhaltbares Nietgerät, welches eingerichtet ist zur Durchführung des Verfahrens nach einem der vorherigen Ansprüche. Das Nietgerät umfasst Mittel zum Erfassen des Verlaufs der Zugkraft während eines Nietsetzvorgangs und eine Steuereinheit zur Analyse des erfassten Verlaufs und zur Festlegung des Maximalwertes anhand eines im Verlauf der Zugkraft definierten charakteristischen Punktes.

Es ergeben sich die bezüglich des Verfahrens bereits genannten Vorteile und weitere Ausgestaltungsmöglichkeiten.

Vorzugsweise umfasst das Nietgerät der vorgenannten Art Eingabeelemente, insbesondere Eingabetasten für eine Eingabe einer Nutzereingabe. Mit einer solchen Nutzereingabe können weitere Parameter eingegeben werden, die durch die Funktion zur Festlegung des Maximalwertes berücksichtigt werden sollen. Alternativ oder in Kombination dazu kann ein Display vorgegeben sein, durch welches der gültige Maximalwert angezeigt wird.

Die Erfindung wird anhand der Figuren nachfolgend näher erläutert, hierin zeigt
- Figur 1: den Verlauf der Stromstärke über die Zugstrecke während des Setzens eines Blindnietelements außerhalb einer Aufnahmebohrung;
- Figur 2: unterschiedliche Verläufe der Stromstärke über die Zugstrecke während des Setzens eines Blindnietelements in einer Aufnahmebohrung mit unterschiedlich großen Klemmbereichen.
- Figur 3: ein Verlauf der Stromstärke über die Zugstrecke während der erfindungsgemäßen Einrichtung des Nietgerätes, mit einem eingezeichneten, festgelegten Stromstärkemaximalwert.

In einem erfindungsgemäßen, elektrisch betriebenen Nietgerät wird die Zugkraft, die auf ein Zugelement des Blindnietelements aufgebracht wird, durch die Stromstärke definiert. Diese Stromstärke nimmt ein elektrischer Antrieb während der Erzeugung der Zugkraft auf. Ein hierfür geeignetes Nietgerät ist beispielsweise in der DE 10 2013 105 703 A1 offenbart.

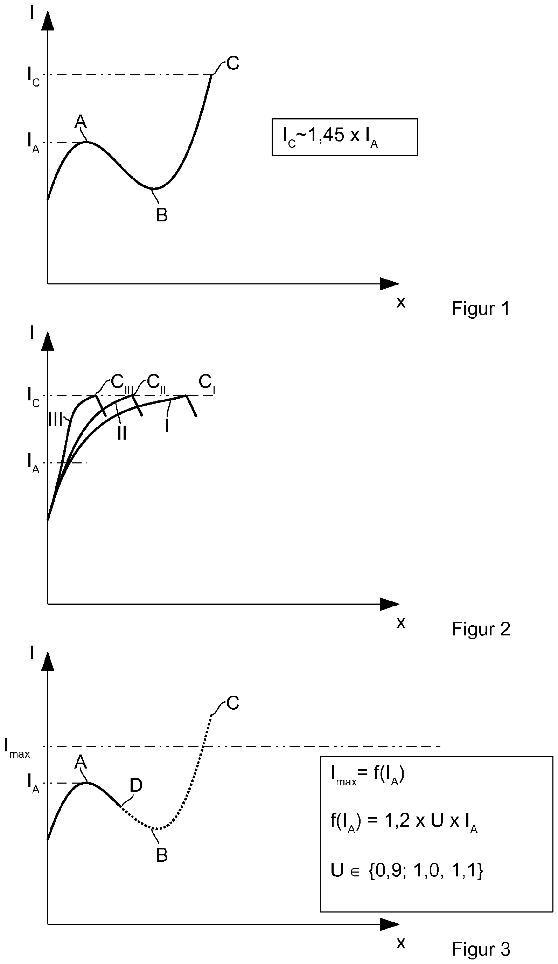

Die Figur 1 zeigt nun den Verlauf der Stromstärke I über der Zugstrecke x eines Zugdorns des Nietgeräts während eines Setzvorgangs. Bei diesem Setzvorgang ist allerdings das Nietelement nicht in einer Aufnahmebohrung aufgenommen, sondern wird vielmehr durch das Nietgerät frei in der Luft gehalten. Zunächst steigt die Zugkraft und damit die Stromstärke I steil an und erreicht beim Punkt A ein erstes Maximum. Dieses erste Maximum A entsteht dadurch, dass zunächst ein Schließwulst des Blindnietelements umgeformt wird. Nach dieser ersten Umformung verringert sich bei fortgesetzter Zugbeanspruch die Kraft bis zu einem Minimum B. Anschließend stößt das Blindniet an einen Anschlag des Nietgerätes an, so dass die Kraft nunmehr steil weiter ansteigt bis zu einem zweiten Maximum C, an dem das Blindnietelement zerstört wird.

Anhand des Diagramms nach Figur 1 lassen sich folglich zwei markante Größen des Nietsetzens ablesen. Dies ist zum einen ist die erforderliche Stromstärke I_{A}, um die Kraft zum Erzeugen des Schließwulstes aufzubringen. Zum anderen ist dies die Stromstärke I_{C}, ab der das Blindnietelement zerstört wird.

In Figur 2 wird der Verlauf der Stromstärke über den Verlauf der Zugstrecke x dargestellt, für einen Nietsetzvorgang, bei dem das Blindnietelement bestimmungsgemäß in einer dem Blindnietelement entsprechenden Aufnahmebohrung angeordnet ist. Der Verlauf ist hier jeweils für unterschiedlich große Klemmbereiche gezeigt. Der Klemmbereich stellt dabei, in axialer Richtung des Niets betrachtet, die Länge der Aufnahmebohrung dar, über welche die Klemmung zwischen Nietelement und Aufnahmebohrung erfolgt. Die Kurve I beschreibt dabei den Verlauf für einen Klemmbereich von 1 mm, die Kurve II beschreibt den Verlauf für einen Klemmbereich von 2 mm und die Kurve III beschreibt den Verlauf für einen Klemmbereich von 3 mm.

Die Zerstörung des Blindnietelements tritt dabei unabhängig von der Ausprägung des Klemmbereichs jeweils bei derselben Kraft beim Maximum C auf, also bei Auftreten der Stromstärke I_{C}. Lediglich die jeweils bis dahin durchlaufene Zugstrecke ist um so geringer, je größer der Klemmbereich ist.

Hieraus folgt, dass die maximale Stromstärke folglich zwischen diesen beiden Werten einzustellen ist.

Beim erfindungsgemäßen Einrichtvorgang wird entsprechend Figur 3 nun ein Nietsetzvorgang durchgeführt, bei dem sich das Blindnietelement außerhalb der Aufnahmebohrung befindet, also frei durch das Nietgerät in der Luft gehalten wird. Es erfolgt nun der steile Anstieg der Kurve bis zum ersten Maximum A, bei dem das Nietgerät die eine Stromstärke I_{A} als den charakteristischen Wert aufnimmt. Auf dem Weg zum ersten Minimum bei B kann der Setzvorgang bei D abgebrochen werden, da es lediglich auf die Bestimmung des Stromstärkewertes bei dem ersten Maximum A ankommt.

Nun wird rechnerisch aus dem erfassten Stromstärkewert I_{A} der Stromstärkemaximalwert Iₘₐₓ berechnet, als eine Funktion von I_{A}. Die Funktion weist beispielsweise eine Konstante auf, in diesem Fall 1,2, sowie einen Nutzereingabewert U, die beide multipliziert werden mit dem aufgenommenen Stromwert I_{A} beim ersten Maximum A. Der Nutzereingabewert U kann beispielsweise über ein berührungsempfindliches Display oder eine Schalterstellung direkt am Nietgerät eingestellt werden und kann beispielsweise die Werte 0,9, 1,0 oder 1,1 beinhalten. Bei einem Nutzereingabewert U von 1,0 wird folglich der Stromstärkemaximalwert auf das 1,2 fache der Stromstärke beim ersten Maximum A festgelegt. Durch die Möglichkeit, eine Nutzereingabe durch den Nutzer einzugeben, erhält der Nutzer die Möglichkeit, Abweichungen vorzugeben. Beispielsweise werden bestimmte Typen von Blindnietelement erst bei einem deutlich höheren Stromstärkewert I_{C} zerstört, die über dem doppelten der Stromstärke I_{A} beim ersten Maximum A liegen; bei solchen Blindnietelementen könnte durch Einstellung des Nutzereingabewertes auf einen Wert > 1,0 der Stromstärkemaximalwert relativ zum Stromstärkewert I_{A} beim ersten Maximum A erhöht werden.

Der Stromstärkemaximalwert Iₘₐₓ ist nun deutlich oberhalb des Stromstärkewerts I_{A} beim ersten Maximum A angeordnet, so dass der Schließwulst des Nietelements ohne Weiteres erzeugt wird. Zugleich ist der Stromstärkemaximalwert Iₘₐₓ deutlich unterhalb des Maximums bei C angeordnet, an dem ein Versagen des Nietelements stattfinden würde.

## Patentansprüche

1. Verfahren zur Einrichtung eines mit einem elektrischen Antrieb versehenen handhaltbaren Nietgerätes zum Setzen von Blindnietelementen in einer Aufnahmebohrung
- wobei das Nietgerät ausgebildet ist, während des Setzvorgangs eine Zugkraft (F) auf ein Zugelement des Blindnietelements aufzubringen, wobei die maximale Zugkraft (F), mit der ein Blindnietelement gesetzt wird, durch einen einstellbaren Maximalwert (Iₘₐₓ) definiert wird, der während der Einrichtung festgelegt wird,
- wobei das Verfahren zur Einrichtung an einen zu verwendenden Typ von Blindnietelementen die folgenden Verfahrensschritte umfasst:
Durchführen eines Setzvorgangs mit einem Blindnietelement des zu verwendeten Typs,
Erfassen eines Verlaufs der Zugkraft während des Setzvorgangs, Ermitteln zumindest eines charakteristischen Wertes (I_{A}) aus diesem Verlauf,
Festlegen des Maximalwertes (Iₘₐₓ) als Funktion des charakteristischen Wertes (I_{A}),
**dadurch gekennzeichnet, dass** das Blindnietelement während der Einrichtung des Nietgerätes außerhalb einer Aufnahmebohrung angeordnet ist.

2. Verfahren nach Anspruch 1,
**dadurch gekennzeichnet,**
**dass** ein erstes Maximum (A) des Verlaufs als charakteristischer Wert ermittelt wird.

3. Verfahren nach dem vorherigen Anspruch,
**dadurch gekennzeichnet,**
**dass** der Maximalwert festgelegt wird, indem der Wert des ersten Maximums mit einem vorgegebenen Faktor, insbesondere einem Faktor zwischen 1,1 und 1,5, multipliziert wird.

4. Verfahren nach einem der vorherigen Ansprüche,
**dadurch gekennzeichnet,**
**dass** die Funktion zum Festlegen des Maximalwertes ferner eine Nutzereingabe berücksichtigt.

5. Verfahren nach einem der vorherigen Ansprüche,
**dadurch gekennzeichnet,**
**dass** mittels der Steuereinheit ein Stromstärkemaximalwert (Iₘₐₓ) als Maximalwert aus der Stromaufnahme des Antriebs während eines Setzvorgangs ermittelt wird.

6. Verfahren nach einem der vorherigen Ansprüche,
**dadurch gekennzeichnet,**
**dass** der ermittelte Stromstärkemaximalwert (Iₘₐₓ) dem Nutzer über ein am Nietgerät befindliches Display angezeigt wird.

7. Verfahren nach einem der vorherigen Ansprüche,
**dadurch gekennzeichnet,**
**dass** der Verlauf der Zugkraft anhand einer Stromaufnahme eines elektrischen Antriebs des Nietgeräts oder anhand eines Kraftsensors erfasst wird.

8. Handhaltbares Nietgerät, eingerichtet zur Durchführung des Verfahrens nach einem der vorherigen Ansprüche, umfassend
Mittel zum Erfassen des Verlaufs der Zugkraft während eines der Einrichtung dienenden Nietsetzvorgangs, bei dem das Blindnietelement außerhalb einer Aufnahmebohrung angeordnet ist, eine Steuereinheit zur Analyse des erfassten Verlaufs und zur Festlegung des Maximalwertes anhand eines im Verlauf definierten charakteristischen Punktes.

9. Gerät nach Anspruch 8,
**gekennzeichnet durch**
Eingabetasten für die Eingabe eines Nutzeingabewertes (U) durch einen Nutzer des Nietgerätes mit dem Nietgerät, insbesondere zur Vorgabe des Maximalwertes.

10. Gerät nach einem der Ansprüche 8 oder 9,
**gekennzeichnet durch**
ein Display zur Anzeige des durch die Steuereinheit festgelegten Maximalwertes.

## Claims

1. A method for configuring a handheld riveting device, provided with an electrical drive, for setting blind rivet elements in a receiving bore,
wherein the riveting device is designed to apply a tensile force (F) to a traction element of the blind rivet element during the setting operation,
wherein the maximum tensile force (F), with which a blind rivet element is set, is defined by an adjustable maximum value (Iₘₐₓ), which is determined during the configuration,
wherein the method for configuring the type of blind rivet elements to be used comprises the following method steps:
carrying out a setting operation using a blind rivet element of the type to be used;
detecting a gradient of the tensile force during the setting operation;
determining at least one characteristic value (I_{A}) from this gradient;
determining the maximum value (Iₘₐₓ) as a function of the characteristic value (I_{A});
**characterized in that** the blind rivet element is arranged outside of a receiving bore during the configuration of the riveting device.

2. The method according to claim 1,
**characterized in that**
a first maximum (A) of the gradient is determined as the characteristic value.

3. The method according to one of the preceding claims,
**characterized in that**
the maximum value is determined **in that** the value of the first maximum is multiplied by a predetermined factor, in particular a factor between 1.1 and 1.5.

4. The method according to one of the preceding claims,
**characterized in that**
the function for determining the maximum value additionally takes a user input into account.

5. The method according to one of the preceding claims,
**characterized in that**
by means of the control unit, a current strength maximum value (Iₘₐₓ) is determined as a maximum value from the current draw of the drive during a setting operation.

6. The method according to one of the preceding claims,
**characterized in that**
the determined current strength maximum value (Iₘₐₓ) is displayed to the user via a display located on the riveting device.

7. The method according to one of the preceding claims,
**characterized in that**
the gradient of the tensile force is detected based on a current draw of an electric drive of the riveting device or on the basis of a force sensor.

8. A handheld riveting device configured to carry out the method according to one of the preceding claims, comprising:
means for detecting the gradient of the tensile force during a rivet setting operation, which functions for the configuration, in which the blind rivet element is arranged outside of a receiving bore,
a control unit for analyzing the detected gradient and for determining the maximum value on the basis of a characteristic point defined in the gradient.

9. The device according to claim 8,
**characterized by**
input buttons for entering a user input value (U) by a user of the riveting device using the riveting device, in particular for specifying the maximum value.

10. The device according to one of claims 8 or 9,
**characterized by**
a display for displaying the maximum value determined by the control unit.

## Revendications

1. Procédé pour régler une riveteuse manuelle dotée d'un entraînement électrique pour la pose d'éléments de rivets aveugles dans un alésage de réception,
dans lequel la riveteuse est réalisée, pendant le processus de pose, pour appliquer une force de traction (F) sur un élément de traction de l'élément de rivet aveugle,
dans lequel la force de traction maximale (F) avec laquelle un élément de rivet aveugle est posé est définie par une valeur maximale réglable (Iₘₐₓ) qui est déterminée pendant le réglage,
dans lequel le procédé pour le réglage au niveau d'un type d'élément de rivet aveugle à utiliser comprend les étapes suivantes du procédé :
la réalisation d'un processus de pose avec un élément de rivet aveugle du type à utiliser,
la détection d'un tracé de la force de traction pendant le processus de pose,
la détermination d'au moins une valeur caractéristique (I_{A}) à partir de ce tracé,
la définition de la valeur maximale (Iₘₐₓ) en tant que fonction de la valeur caractéristique (I_{A}),
**caractérisé en ce que**, pendant le réglage de la riveteuse, l'élément de rivet aveugle est disposé à l'extérieur d'un alésage de réception.

2. Procédé selon la revendication 1,
**caractérisé en ce**
**qu'**un premier pic (A) du tracé est déterminé en tant que valeur caractéristique.

3. Procédé selon la revendication précédente,
**caractérisé en ce que**
la valeur maximale est déterminée **en ce que** la valeur du premier pic est multipliée par un facteur prescrit, en particulier un facteur compris entre 1,1 et 1,5.

4. Procédé selon l'une des revendications précédentes,
**caractérisé en ce que**
la fonction pour la détermination de la valeur maximale tient en outre compte d'une saisie d'utilisateur.

5. Procédé selon l'une des revendications précédentes,
**caractérisé en ce**
**qu'**au moyen de l'unité de commande, on détermine une valeur maximale d'intensité de courant (Iₘₐₓ) en tant que valeur maximale à partir de la consommation de courant de l'entraînement pendant un processus de pose.

6. Procédé selon l'une des revendications précédentes,
**caractérisé en ce que**
la valeur maximale d'intensité de courant (Iₘₐₓ) déterminée est affichée pour l'utilisateur via un écran se trouvant au niveau de la riveteuse.

7. Procédé selon l'une des revendications précédentes,
**caractérisé en ce que**
le tracé de la force de traction est détecté à l'aide d'une consommation de courant d'un entraînement électrique de la riveteuse ou à l'aide d'un capteur de force.

8. Riveteuse manuelle étudiée pour la mise en œuvre du procédé selon l'une des revendications précédentes, comprenant
des moyens pour détecter le tracé de la force de traction pendant un processus de pose de rivet servant au réglage où l'élément de rivet aveugle est disposé à l'extérieur d'un alésage de réception, une unité de commande pour l'analyse du tracé détecté et pour la détermination de la valeur maximale à l'aide d'un point caractéristique défini dans le tracé.

9. Riveteuse selon la revendication 8,
**caractérisée par**
des touches de saisie pour la saisie d'une valeur de saisie d'utilisation (U) par un utilisateur de la riveteuse avec la riveteuse, en particulier pour prescrire la valeur maximale.

10. Riveteuse selon l'une des revendications 8 ou 9,
**caractérisée par**
un écran pour l'affichage de la valeur maximale déterminée par l'unité de commande.
